# EUROPEAN PATENT SPECIFICATION

(11) **EP 2 973 744 B1**
(45) Date of publication and mention of the grant of the patent: **06.09.2017**
(21) Application number: 13742530.2
(22) Date of filing: 08.05.2013
(51) Int. Cl.: H01L 31/048, B09B 3/00, B29B 17/02, B09B 5/00, B32B 43/00, B08B 7/00

(54) **THERMO-MECHANICAL CONTROLLED CRYOGENIC DELAMINATION PROCESS FOR THE RECOVERY OF RIGID MATERIALS COATED WITH PLASTIC MATERIALS**
THERMOMECHANISCH GESTEUERTES KRYOGENES DELAMINIERUNGSVERFAHREN ZUR RÜCKGEWINNUNG VON STARREN MIT KUNSTSTOFFEN BESCHICHTETEN MATERIALIEN
PROCÉDÉ DE DÉLAMINAGE CRYOGÉNIQUE RÉGULÉ THERMOMÉCANIQUEMENT POUR LA RÉCUPÉRATION DE MATÉRIAUX RIGIDES REVÊTUS DE MATIÈRE PLASTIQUE

(30) Priority: 12.03.2013 IT BA20130021
(43) Date of publication of application: 20.01.2016
(73) Proprietor: Politecnico di Bari, 70126 Bari (IT)
(72) Inventor: DASSISTI, Michele, 70127 Localita´Santo Spirito (Bari) (IT)
(74) Representative: Conversano, Gabriele
(86) International application number: PCT/IT2013/000135
(87) International publication number: WO 2014/141311

(56) References cited:
- EP-A1- 0 893 250
- JP-A- 2006 346 636
- US-A- 5 842 650
- US-A1- 2011 183 442
- SUKMIN KANG ET AL: "Experimental investigations for recycling of silicon and glass from waste photovoltaic modules", RENEWABLE ENERGY, PERGAMON PRESS, OXFORD, GB, vol. 47, 18 April 2012 (2012-04-18), pages 152-159, XP028510222, ISSN: 0960-1481, DOI: 10.1016/J.RENENE.2012.04.030 [retrieved on 2012-04-26]

## Description

The object of the present invention is in the field of processes employed for end of life recovery of the raw materials employed in the manufacture of multilayer artifacts. More particularly, the object of the present invention is a cryogenic conditioning process for artifacts composed of multiple rigid material layers interspersed with materials having different thermal and elasticity characteristics and different stiffness.

As known, a good part of electronics and electrical waste, such as the artifacts described above, goes to landfill or alternatively undergoes incineration and recovery process without any preliminary treatment and therefore results in the subsequent dispersion into environment of highly polluting substances.

In contrast, many end of life electronic products could be reused, restored or recycled thus obtaining a clear benefit in protecting and safeguarding the environment and reducing pollution. Another advantage could derive from the recovery of materials that in many cases have a high economic value.

An example of an electronic system made with materials consisting of rigid layers alternated with plastic layers, i.e. the type to which it is possible to apply the process according to the present invention, and upon which much attention has recently been focused regarding its end of life disposal, is represented by photovoltaic modules.

At a structural level, photovoltaic modules are made from a sandwich of several layers joined together by means of a hot lamination process.

The main component of each module is represented by photovoltaic cells which are contained within a polymeric layer made of Ethylene Vinyl Acetate (EVA).

Said sandwich is constituted by a plurality of layers, adjacent to each other, namely: one rear polymeric waterproof coating layer, made according to requirement in either Ethylene Vinyl Acetate (EVA), polyethylene terephthalate (PET) or polyvinyl fluoride (Tedlar); a pair of layers approximately 0.6 mm thick realized in Ethylene Vinyl Acetate (EVA) that are protect the photovoltaic cells (said rigid layer); and a rigid front layer of tempered glass approximately 3 mm thick that serves as a protective surface that is also receptive to light.
At the end of their operational life of around twenty to thirty years, each PV module can be subjected to a special treatment that allows for the safe disposal of toxic materials (usually metal) and that also allows for the recovery of some elements comprising the module, some of which are characterized by a high economic value (silicon and precious metals).

The prior art relating to end of life recycling processes and the treatment of photovoltaic panel parts that cannot be removed, as already mentioned, consists in recovering the rigid layers of material (electronic grade silicon) and plastic elements (copolymers) to be found in adjacent layers bound together by melting processes. This consists in a series of different processes, both from the technological and industrial points of view and from the point of view of the process outputs.

One of these processes for the recycling of photovoltaic modules, as described in Patent **No.** US6063995**,** involves the separation of the components that constitute the photovoltaic module by means of a baking process which raises its temperature, such as to melt only the polymeric component of the module, leaving unaltered the tempered glass and the photovoltaic cells themselves.

In particular said process provides the photovoltaic module, deprived of the outer frame and terminal blocks, to be initially heated to a temperature close to 100°C, thereby allowing for easy manual separation of the rear layer polymeric coating. It is then subsequently placed in an electric furnace where it undergoes a baking process at temperatures between 480°C and 540°C.

During the photovoltaic module baking process, in order to achieve an inert atmosphere, an inert gas, preferably nitrogen, is introduced into the oven through a feeder conduit.

The photovoltaic module baking process occurs at temperatures between 480°C and 540°C and for a period of time necessary for the degradation of the EVA polymeric layers. When the two EVA polymeric layers reach melting temperature, physical separation of the photovoltaic cells occurs at which point, together with the tempered glass, they detach and rest on supports contained in the oven.

The gaseous decomposition products from the polymeric layers are subsequently burned within an afterburner producing as waste products carbon dioxide and water vapor.

Said process allows for the full recovery of the tempered glass and photovoltaic cells. The latter can then be subjected to further processing, such as cementing or acid attack so as to recover the silver or other metals present within the cells.

A further and different known process, which allows for the recycling of photovoltaic modules, is described in patent No. US6129779**.** It is based on a process that provides for the recycling and recovery of the metallic constituents of a photovoltaic module by crushing the photovoltaic module itself and subsequently dissolving out the metals in an acid solution bath. The solution thus obtained is then separated from the solid fragments and treated with a precipitating agent that then allows for the recovery of the metals obtained from the photovoltaic module.

More particularly, said process comprises a first step in which the photovoltaic module is crushed in order to obtain a plurality of fragments having a size sufficiently small to be chemically treated. The fragments of the module thus obtained are transferred to a container containing an acid, for example sulphuric acid, nitric acid or hydrochloric acid, which is capable of dissolving the metal material to be recovered thus separating it from the rest of the fragments. Upon the chemical reaction between the photovoltaic cell metals and the acid, the dissolution of the metal material occurs with the subsequent formation of a liquid phase consisting of metals combined with mordant acid and a solid phase formed by the non-metallic PV module fragments.

The solid phase present in the solution is then separated from the liquid phase by means of a filtration process, and on the contrary the non-metallic material contained in the solid phase is separated from the liquid phase by means of a vibrating screen.

Finally, in the last phase of the process, the recovery of the metals from the solution occurs. A method for separating the components within the solution consists in precipitating the metals in solution through the addition of a suitable chemical precipitating agent.

Another known photovoltaic module recycling process is described in patent No. US5997718**,** relating to a procedure to recover the semiconductor metals from end of life photovoltaic modules by means of a "hydrometallurgical" process.

Upon the mechanical fragmentation of the photovoltaic module, the photovoltaic cells or any other photovoltaic waste is subjected to a leaching process that by means of an acid solution provides for the removal of all metals from the remaining photovoltaic module materials.

Before chemical treatment, the glass substrate is removed and can be thereafter further reused in the manufacture of photovoltaic modules or recycled or disposed of in landfill as non-hazardous waste.

The leaching solution is subsequently neutralized by mixing it with a basic compound containing a certain amount of calcium that leads to the formation of a solid precipitate of cadmium and tellurium.

Finally, the solid precipitate is subjected to a combustion process and subsequently cooled and washed in order to recover the cadmium oxide (CdO) and tellurium oxide (TeO).

Finally, a further known process is described in patent No. DE102008058530A1**,** regarding a method for the recycling of photovoltaic modules and waste of photovoltaic origin, and in particular thin-film Cadmium Telluride and CIS solar cells. Specifically, this German patent provides information relating to a method for disassembling modules into their constituent elements so as to easily use them in the manufacture of new modules.

The method involves firstly that the photovoltaic modules, or parts thereof, in which the polymeric layer has not been structurally damaged, are subjected to a continuous or discontinuous mechanical crushing process by means of a vibrating disc mill.

The fragments thus obtained are then subjected to a chemical bath treatment at room temperature in a 15% hydrochloric acid solution wherein the complete dissolution of the metals contained within the fragments occurs. This phase is influenced by the amount of hydrogen peroxide (35% in weight) contained within the solution and is facilitated by the use of a suitable magnetic stirrer.

Finally, at the end of the metals dissolution process, the solution is filtered thus obtaining the recovery of the glass and polymers. These are subsequently subjected to a further process of washing thereby definitively recovering the glass and EVA.

The Japanese patent application JP 2006 346636 A discloses a thermo-mechanical controlled cryogenic delamination process for the recovery of rigid materials contained within artifacts composed of multiple rigid material layers interspersed with materials having diffferent thermal and elasticity characteristics and different stiffness, i.e. metal coated with resin, comprising the use of at least one system for the controlled cryogenic cooling of the elements or parts thereof, at least one selective temperature control system for high speed heating, and at least one power transmission system, the process comprising the following phases: - Temperature homogenization of said multiple rigid material layers and of said materials having diffferent thermal and elasticity characteristics; - Swift or super swift cooling at cryogenic temperatures of the layers adjacent to the rigid layer of the material to be recovered, by means of the controlled cryogenic cooling system controlling the flow rate and pressure of a cold carrier through a fluids compressor or other suitable system; - When cryogenic temperature is stable, superimposition of a thermal cycle to transmit a temperature differential between the external layers and the rigid layer to be recovered, to exploit the different mechanical properties of expansion at different temperatures and then produce different shear stress between the layers; - Mechanical separation of one or more external layers with respect to the layer of the rigid material to be recovered by means of suitable mechanical action devices. The processes described in the prior art have a number of drawbacks, such as in the case of the hot photovoltaic module recovery processes that, despite making it possible to fully recover the photovoltaic cells and covering glass, involve high energy consumption.

With respect to recycling processes comprising module crushing and subsequent chemical bath, as such these processes do not allow for the recovery of higher added value photovoltaic module components and give rise, at the end of the process, to a series of fragments whose reintegration into the production cycle requires additional processing which is costly both from an economic and an environmental standpoint.

The purpose of this patent is to solve the drawbacks of the prior art by providing a process which allows for the recovery of rigid materials contained within artifacts composed of multiple rigid material layers interspersed with materials having different thermal and elasticity characteristics and different stiffness, with as such high added value or, as originally present in industrial type artifacts, minimizing the mechanical or chemical deterioration and therefore the need to proceed to subsequent treatments.

A further objective is to reduce the costs for the treatment of end of life fir multi-layer materials with different thermal and elastic features and for their reuse into the recovery processes currently in use.
Another objective is to provide a process which allows for almost immediate reuse of the components and materials recovered by following the same process, thus lengthening the useful life of the components themselves and not requiring further treatment.

The process, object of the present invention, relates to a more sustainable methodology with therefore lower economic and environmental impact compared to the processes currently known in the field of recycling and/or the recovery of systems of the type in question such as, for example, the recovery of silicon cells contained in photovoltaic modules.

The operating principle of this treatment process does not preclude its application within different fields of application, as far as in the presence of separate layers consisting of rigid materials (e.g. metals) connected by interposing materials with different levels of stiffness and thermal conductivity (e.g. plastic or amorphous) minimizing chemical and/or destructive treatment without altering the geometrical structure or mechanical properties and exploiting the physical properties of materials that exhibit different expansion.

The thermo-mechanical controlled cryogenic delamination process for the full recovery of rigid mono-, polycrystalline or amorphous materials coated with plastic materials according to the present invention, is hereinafter described with the aid of accompanying drawings which respectively illustrate the following figures:
Fig. 1 is a block diagram of the process steps;
Fig. 2 is a cutaway view of a generic multilayer component;
Fig. 3 is an axonometric exploded view of a photovoltaic module;
Fig. 4 is an axonometric view of a photovoltaic module when subjected to the cryogenic cooling phase;
Fig. 5 is an axonometric view of a photovoltaic module when the layer of material to be recovered is subjected to the thermal and mechanical oscillation phase while at the same time maintaining the adjacent layers at cryogenic temperature;
Fig. 6 is an axonometric exploded view of a photovoltaic module when subjected to insufflation of liquid mixtures and the consequent final delamination of the layers;
Fig. 7 is a diagram illustrating the variations in temperature as a function of time during the course of the whole cryogenic process;
Fig. 8 are diagrams relating to changes in stress and mechanical deformation, temperature, deformations induced by vibrations brought about by the first natural frequency of resonance and relative forces applied as a function of time.

The thermo-mechanical controlled cryogenic delamination process according to the present invention, is based on a methodology that relies on the exploitation of the different thermal expansion characteristics of the plastic materials adjacent to rigid components (mono-, polycrystalline or amorphous in the case of photovoltaic panels) and the different ductility/brittleness curves that produce, possibly together with a simultaneous mechanical vibration, the same controlled thermo-mechanical delamination effect.

And in fact, the appropriate management of temperature transitions combined with mechanical actions induced by vibration at the first natural frequency of resonance is the mechanism that allows the separation of materials of different nature and characteristics, thus recovering at the end of the process the constituents of a multilayer element in such a state, that they can be used again without any special treatment, thus essentially obtaining an extension to the useful life of the component or its parts.

An example of an application of the process according to the present invention, is one that provides for the recovery of the electronic-grade silicon present within a photovoltaic module.

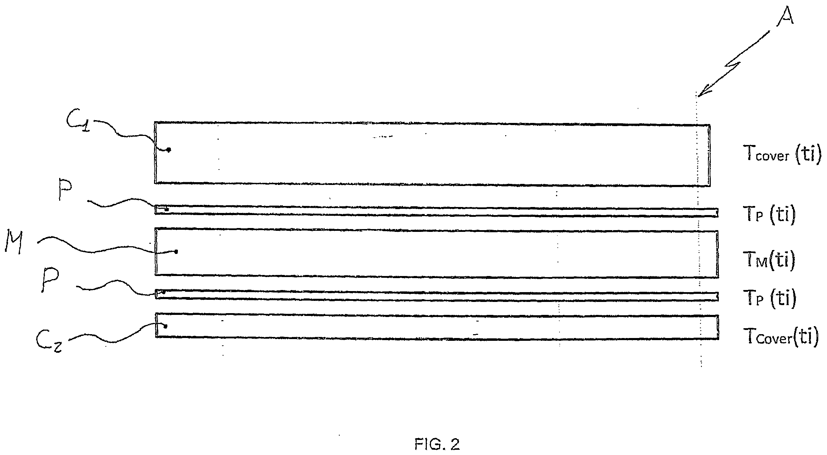

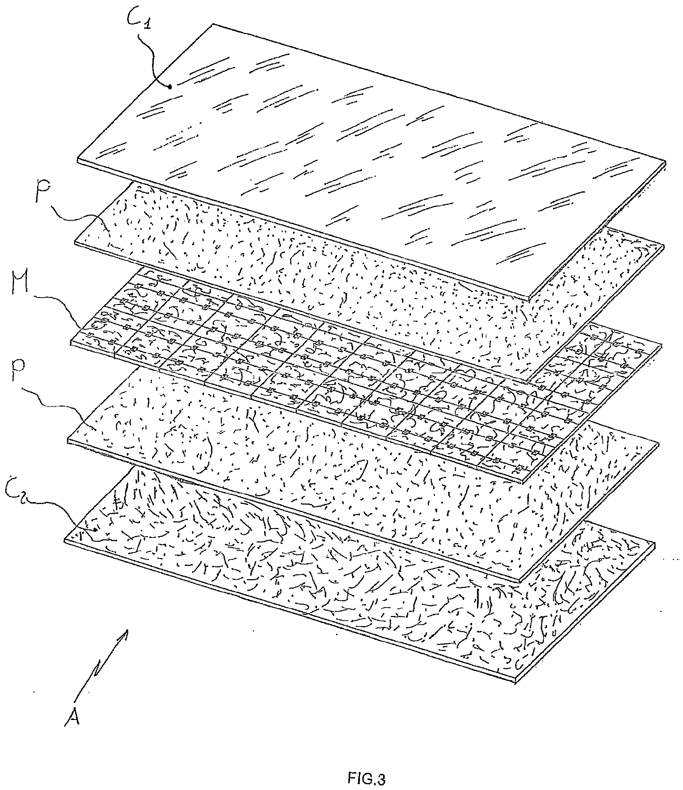

Thus, as illustrated in Figures 2 and 3 each photovoltaic module A consists of the following layers:
- a layer of silicon or different conductor or semiconductor material M;
- a pair of polymeric layer of Ethylene-vinyl-acetate P;
- a rear polymeric waterproof coating layer C₁;
- a front tempered glass layer C₂.

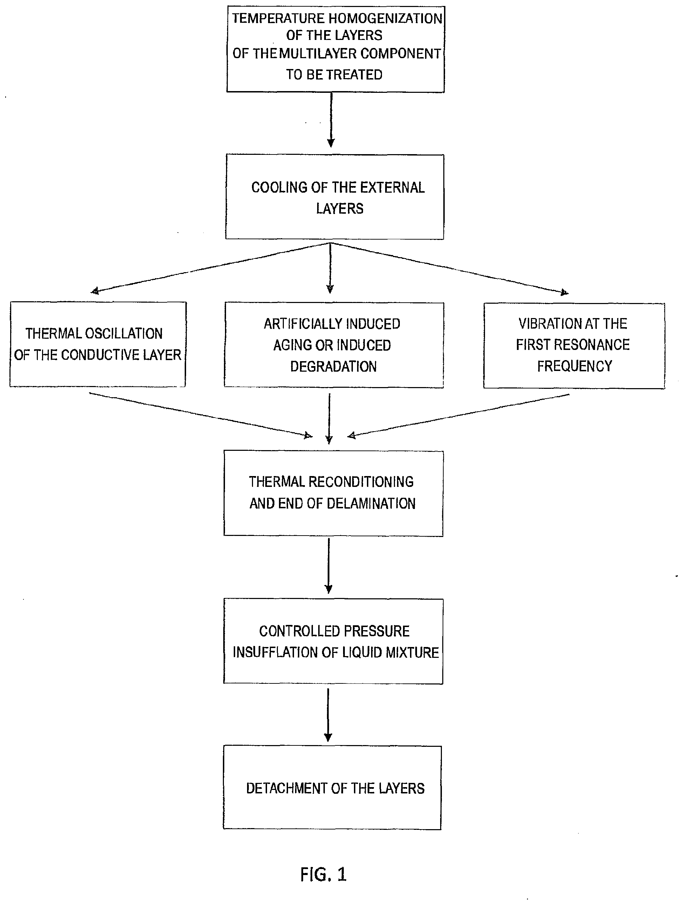

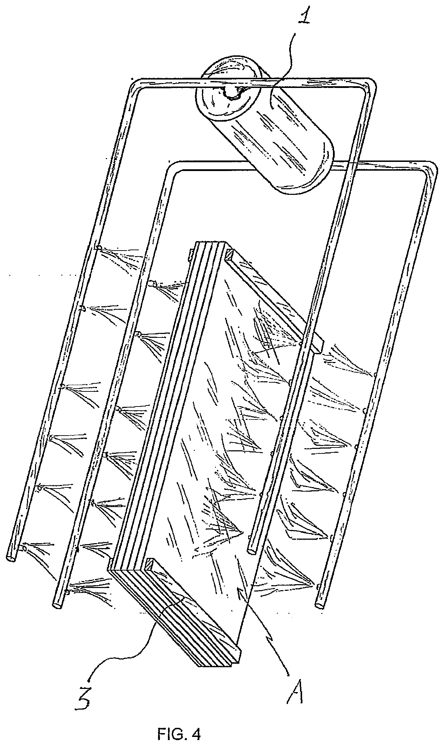

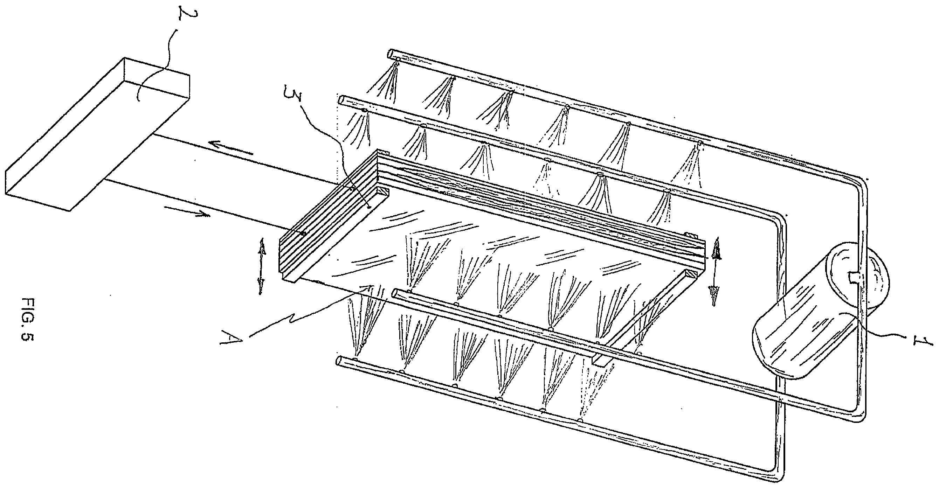

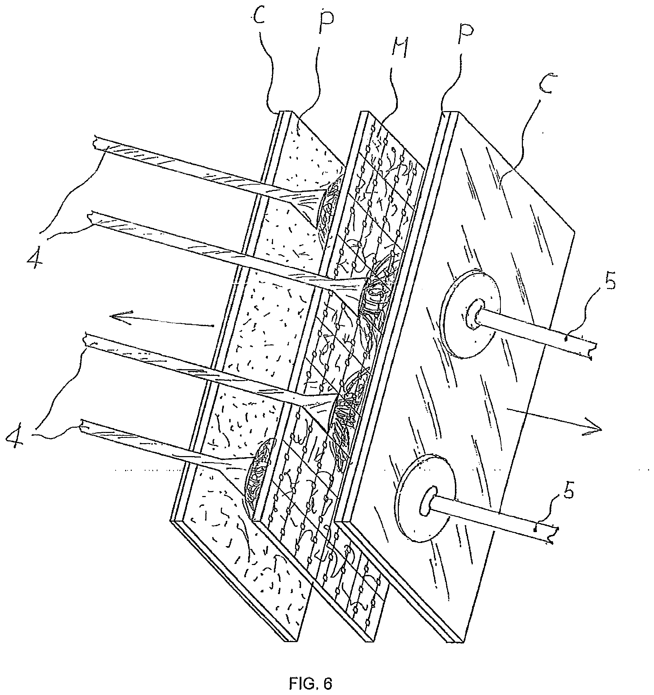

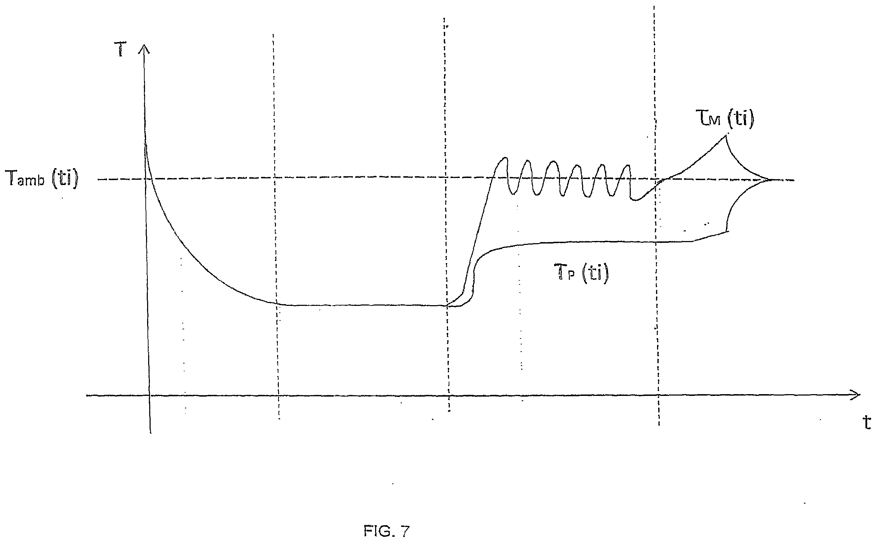

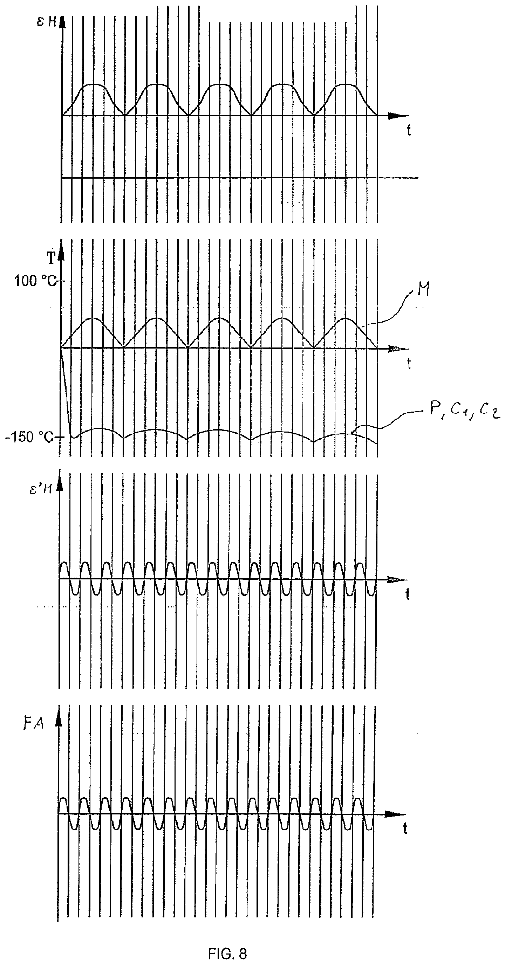

As illustrated in Figure 1, the process involves the following steps:
- temperature stabilization and homogenization for a given time of all the component layers to be treated so that all the layers reach the same cryogenic temperature by placing said component in a conditioned environment: for example, a climatic chamber; in the case described, the multi-layer component is a photovoltaic module A.
- When the temperature is stable, there follows a period of swift or super swift cooling of the photovoltaic module A and in particular of the layers adjacent to the semiconductor material layer M, by means of a cryogenic cooling system 1 that provides for the continuous control of the flow rate and pressure of a cold carrier by means of a fluid compressor or other suitable system offering the possibility of temperature conditioning, as illustrated in Figures 4 and 7.
- The high cooling cryogenic system is equipped with a system that allows for the real-time control of the cooling conditions, namely, both the temperature and the flow rate of the refrigeration carrier.
- As illustrated in Figures 5, 7 and 8, the second phase is followed by a phase during which thermal cycles at a controlled frequency is imposed upon the semiconductor material layer M (metallic, silicon). This produces a thermal differential between the layers at cryogenic temperature P and the semiconductor materials layer M at higher temperatures. In this way advantage is taken from the different mechanical expansion characteristics at different temperatures thereby producing a differential tangential stress between the various layers of the multilayer component A; this stress is defined as "thermal delamination stress or τ_{T}".
- Said phase is realized by a selective system 2, providing heat to the high conductivity layer M only without warming the adjacent layers P which are of low thermal conductivity. The system 2 can be a contact system based on the Joule heating effect brought about by exploiting the cascade property of diodes, in the case of photovoltaic panels by superimposing a current which is greater than its resistance within the internal circuit or else by photonic excitation by contactless direct irradiation or any other equivalent system. Furthermore, always in the cooling condition of the module A and the simultaneous heating of the semiconductor layer M, it may be opportune, depending on the components, to apply cycles of bending stresses at controlled frequency of the entire element A or of the combination of layers to produce a secondary mechanical shear stress (here defined mechanical delamination stress or τ _{M}) between the semiconductor layer M and the contiguous layers P whose frequency is in phase with the thermal cycles and produce a total delamination stress which is synergic than the individual effects. The bending action resulting in the vibration of the element A is performed by suitable shaking systems 3.
- The following phase provides controlled delamination induced by the total effect of the thermal and mechanical delamination stress produced between the external layers P and the semiconductor layer M, producing a relative sliding action governed by the different planes of expansion τ_{TOT} of the material being subject to the shearing force τ_{TOT}=τ_{T}+τ_{M}.
- In the last phase, the purpose of which is to obtain a final delamination of the layer P from the tempered glass C₂, by means of suitable systems 4 a mixture of liquids at a controlled pressure and flow rate is introduced as shown in Figure 6 so as to allow for the final separation of the plastic parts from the rigid ones. This is due to the variation in the structural properties and bonding of said plastic materials (artificially induced aging mechanism).

At the end of the insufflation phase, the process continues with a mechanical separation phase of one or more external layers with respect to the semiconductor material layer M, by means of suitable mechanical systems suitable for producing stress that is both tangential and normal to the layer planes and induced into the them by contact systems for example by contact depression systems 5, i.e. by mechanical cutting by means of a rigid stop system affecting the thickness of the external layers.

## Claims

1. Thermo-mechanical controlled cryogenic delamination process for the recovery of rigid materials contained within artifacts composed of multiple rigid material layers interspersed with materials having different thermal and elasticity characteristics and different stiffness, comprising the use of at least one system for the controlled cryogenic cooling (1) of the elements or parts thereof, at least one selective temperature control system for high speed heating (2), a system for high frequency transmission of motion to produce vibrations at the first natural frequency of resonance (3), at least one insufflation system at controlled pressure (4) and at least one power transmission system, at least one mechanical actuator (5) for manipulating layers; the process being **characterized by** the following phases:
- Temperature homogenization of all said multiple rigid material layers and of said materials having different thermal and elasticity characteristics
- Swift or super swift cooling at cryogenic temperatures of the layers adjacent to the layer of the rigid material to be recovered, by means of the controlled cryogenic cooling system (1) controlling the flow rate and pressure of a cold carrier through a fluids compressor or other suitable system;
- When cryogenic temperature is stable, superimposition of thermal cycles at controlled frequency in the layer of the rigid material to be recovered, to transmit a temperature differential between the external layers maintained at cryogenic temperature and the layer to be recovered, at significantly higher temperature, to exploit the different mechanical properties of expansion at different temperatures and then produce different shear stress between the layers **i.e.** thermal delamination stress or τ T;
- Always in condition of stable cryogenic temperature, possible simultaneous superimposition of cycles of bending stresses controlled by vibrations of the entire element or of the combination of layers at frequencies at the first frequency of resonance; this action is to produce a secondary mechanical shear stress i.e. mechanical delamination stress or τM between the layer of rigid material to be recovered and the contiguous layers, whose frequency is in phase with the thermal cycles.
- Insufflation of liquid mixtures at controlled pressure and flow rate for the final delamination of the layers or full immersion of layers into a liquid or gaseous mixture;
- Mechanical separation, also through the immersion in an appropriate liquid or gaseous mixture, of one or more external layers with respect to the layer of the rigid material to be recovered by means of suitable mechanical action devices.

2. Process of claim 1 **characterized in that** the cryogenic cooling system (1) is suitable for cooling and for real time control of the cooling conditions, that is of the temperature and flow rate of the cold carrier.

3. Process according to the previous claims **characterized in that** a cold carrier compressor continuously controls the pressure and the flow rate, and it is suitable to operate at temperatures lower than 0 degrees centigrade.

4. Process according to the previous claims **characterized in that** the differential heating is achieved via a selective heating system (2), either by direct contact or non-direct contact, said system (2) being suitable to exclusively affect the high thermal conductivity layers i.e. the layers of the rigid material to be recovered of the multilayered component to be treated, without warming the adjacent layers.

5. Process according to claims 1 and 4 **characterized in that** in case of non-direct contact system the selective heating system can be of the magnetic induction type, of the photonic type or of the radiation type; whereas in case of direct-contact system, the selective induction heating system can be a contact system based on the Joule heating effect.

6. Cryogenic process of claim 1, **characterized in that** the separation of the materials is exclusively obtained by imposition of thermal cycles at controlled frequency of the layer of the material to be recovered, or without the superimposition of vibrations at the first natural frequency of resonance.

7. Process according to the previous claims, **characterized in that** the insufflation of liquid and/or gaseous mixtures at controlled pressure and flow rate for the final delamination of the layers (C2, P, M, CI) is achieved through a compressor, or in a controlled atmosphere chamber wherein the element (A) to be treated is immersed.

8. Process according to the previous claims, **characterized in that** the detachment of the layers (C2, P, M, CI) of the element (A) is achieved by means of shear stresses distributed and transferred to said layers (C2, P, M, CI) via contact depression systems, or via mechanical cutting by means of a rigid clutch system affecting the thickness of the external layers (C2, P, CI)

## Patentansprüche

1. Thermo-mechanisch gesteuertes kryogenes Delaminierungs-Verfahren zur Rückgewinnung von festen Materialien die innerhalb von Produkten enthalten sind, die aus einer Mehrheit von Schichten von festen Materialien bestehen, die Materialien mit unterschiedlichen thermischen und elastischen Eigenschaften und mit unterschiedlicher Steifigkeit aufweisen, umfassend die Verwendung von mindestens ein System für die kontrollierte kryogene Kühlung (1) der Elemente oder Teile davon, mindestens ein selektives Temperaturregelsystem für Hochgeschwindigkeitsheizung (2), ein System zur Hochfrequenzübertragung von Bewegungen zur Erzeugung von Vibrationen bei der ersten Eigenfrequenz der Resonanz (3), mindestens ein Blassystem mit geregeltem Druck (4) und mindestens ein Kraftübertragungssystem, mindestens einen mechanischen Aktuator (5) aufweist, zum Manipulieren von Schichten; wobei das Verfahren durch folgende Phasen gekennzeichnet ist:
- Temperaturhomogenisierung von allen der mehreren starren Materialschichten und der genannten Materialien mit unterschiedlichen thermischen und elastischen Eigenschaften
- Swift oder Super swift Abkühlung bei kryogenen Temperaturen der Schichten die benachbart zur Schicht des zu gewinnende starren Materials sind, mittels des gesteuerten kryogenen Kühlsystems (1) das die Strömungsrate und den Druck eines Kälteträgers durch einen Kompressor von Fluiden oder ein anderes geeignetes System;
- wenn die kryogene Temperatur stabil ist, wird eine Überlagerung von thermischen Zyklen mit kontrollierter Frequenz in der Schicht des zu gewinnenden starren Materials durgeführt wird, um eine Temperaturdifferenz zwischen den äußeren Schichten zu übertragen, die bei der kryogenen Temperatur gehalten werden, und der zugewinnenden Schicht bei einer signifikant höheren Temperatur zu übertragen, um die unterschiedlichen mechanischen Expansionseigenschaften bei unterschiedlichen Temperaturen ausnutzen, und dann eine verschiedene Scherspannung zwischen den Schichten, d.h. eine thermische Delaminierungs-Beanspruchung oder τ^{T} zu erzeugen;
- Immer in einem Zustand von einer stabilen kryogenen Temperatur, mögliche gleichzeitige Überlagerung von Zyklen mit Biegespannungen, die durch Vibrationen des gesamten Elements oder der Kombination von Schichten bei Frequenzen bei der ersten Frequenz der Resonanz gesteuert werden; Ziel einer solchen Aktion ist es, eine sekundäre mechanische Scherbeanspruchung d.h. mechanischen Delaminierungs-Beanspruchung oder ^{τM} zwischen der zu gewinnenden Schicht aus starrem Material und den aneinander angrenzenden Schichten herzustellen, deren Frequenz in Phase mit den thermischen Zyklen ist;
- blasen von flüssigen Gemischen mit kontrolliertem Druck und Durchfluss für die abschließende Delaminierung der Schichten oder vollständiges Eintauchen von Schichten in eine flüssige oder gasförmige Mischung;
- mechanische Trennung, auch durch Eintauchen in eine geeignete flüssige oder gasförmige Mischung, von einer oder mehreren äußeren Schichten in Bezug auf die zu gewinnenden Schicht des starren Materials mittels geeigneter mechanischer Aktionsvorrichtungen.

2. Verfahren nach Anspruch 1, **dadurch gekennzeichnet, dass** das kryogene Kühlsystem (1) zur Kühlung und zur Echtzeitkontrolle der Kühlbedingungen, d.h. der Temperatur und der Durchflussmenge des kalten Trägers, geeignet ist.

3. Verfahren nach einem der vorhergehenden Ansprüche, **dadurch gekennzeichnet, dass** ein Kompressor eines Kaltträgers kontinuierlich den Druck und die Durchflussmenge kontrolliert, und geeignet ist, bei Temperaturen unter 0°C zu arbeiten.

4. Verfahren nach einem der vorhergehenden Ansprüche, **dadurch gekennzeichnet, dass** die Differenzheizung durch ein selektives Heizsystem (2) entweder durch direkten Kontakt oder ohne direkten Kontakt erreicht wird, wobei das genannte System (2) geeignet ist, ausschließlich die Schichten mit hoher Wärmeleitfähigkeit zu beeinflussen, d.h. die Schichten des zu behandelnden starren Materials der zu behandelnden mehrschichtigen Komponente, ohne die angrenzenden Schichten zu erwärmen.

5. Verfahren nach Anspruch 1 und 4, **dadurch gekennzeichnet, dass** im Falle eines nicht direkten Kontaktsystems, kann das selektive Heizsystem aus dem magnetischen Induktionstyp, aus dem photonischen Typ oder aus dem Strahlungstyp bestehen; wobei im Falle eines Direktkontaktsystems, kann die selektive Induktionsheizung aus einem Kontaktsystem auf der Grundlage der Joule-Heizwirkung, bestehen.

6. Kryogenes Verfahren nach Anspruch 1, **dadurch gekennzeichnet, dass** die Trennung der Materialien entweder ausschließlich durch Aufbringen von thermischen Zyklen bei kontrollierter Frequenz der Schicht des zu gewinnenden Materials, oder ohne der Überlagerung von Vibrationen bei der ersten Eigenresonanzfrequenz, erhalten wird.

7. Verfahren nach einem der vorhergehenden Ansprüche, **dadurch gekennzeichnet, dass** das Einblasen von flüssigen und/oder gasförmigen Gemischen bei kontrolliertem Druck und Durchfluss für die abschließende Delaminierung der Schichten (C2, P, M, CI) entweder durch einen Kompressor oder in einer Kammer mit kontrollierter Atmosphäre erfolgt, worin das zu behandelnde Element (A) eingetaucht ist.

8. Verfahren nach den vorhergehenden Ansprüchen, **dadurch gekennzeichnet, dass** das Ablösen der Schichten (C2, P, M, CI) des Elements (A) mittels Schubspannungen erfolgt, die auf die Schichten (C2, P, M, CI) über Kontaktabsenksysteme oder durch mechanisches Schneiden mittels eines starren Kupplungssystems erfolgt, das die Dicke der Außenschichten (C2, P, CI) beeinflusst.

## Revendications

1. Procédé de délaminage cryogénique contrôlé thermo-mécanique pour la récupération de matériaux rigides contenus dans des objets constitués de plusieurs couches de matériaux rigides intercalées avec des matériaux ayant des caractéristiques thermiques et d'élasticité différentes et une rigidité différente, comprenant l'utilisation d'au moins un système de refroidissement cryogénique contrôlé (1) des éléments ou des parties de celui-ci, au moins un système de contrôle de température sélectif pour le chauffage à grande vitesse (2), un système de transmission de mouvement à haute fréquence pour produire des vibrations à la première fréquence naturelle de résonance (3), au moins un système d'insufflation à pression contrôlée (4) et au moins un système de transmission de puissance, au moins un actionneur mécanique (5) pour manipuler des couches; le processus étant **caractérisé par** les phases suivantes:
- homogénéisation de la température de ladite multiplicité de couches de matériaux rigides et desdits matériaux présentant des caractéristiques thermiques et d'élasticité différentes ;
- refroidissement swift ou super swift à des températures cryogéniques des couches adjacentes à la couche du matériau rigide à récupérer, au moyen du système de refroidissement cryogénique contrôlé (1) en contrôlant le débit et la pression d'un porteur froid à travers un compresseur de fluides ou un autres système approprié;
- lorsque la température cryogénique est stable, superposition de cycles thermiques à fréquence contrôlée dans la couche du matériau rigide à récupérer, pour transmettre une différence de température entre les couches externes maintenues à la température cryogénique et la couche à récupérer, à une température significativement plus élevée, pour exploiter les propriétés mécaniques différentes d'expansion à des températures différentes et donc pour produire une différente contrainte de cisaillement entre les couches, c'est-à-dire une contraintes de délaminage thermique ou τ^{T}) ;
- toujours dans une condition de température cryogénique stable, possibilité de superposition simultanée de cycles de contraintes de flexion contrôlés par des vibrations de l'ensemble des éléments ou par la combinaison des couches à des fréquences comme la première fréquence de résonance; cette action avec le but de produire une contrainte de cisaillement mécanique secondaire, c'est-à-dire une contrainte mécanique ou de délaminage ^{τM} entre la couche de matériau rigide à récupérer et les couches contiguës, dont la fréquence est en phase avec les cycles thermiques ;
- insufflation de mélanges liquides à pression contrôlée et d'un débit pour la délamination finale des couches ou l'immersion totale des couches dans un mélange liquide ou gazeux;
- séparation mécanique, c'est-à-dire par immersion dans un mélange liquide ou gazeux approprié, d'une ou plusieurs couches externes par rapport à la couche du matériau rigide à récupérer, au moyen de dispositifs d'action mécanique appropriés.

2. Procédé selon la revendication 1, **caractérisé en ce que** le système de refroidissement cryogénique (1) est approprié pour le refroidissement et pour le contrôle en temps réel des conditions de refroidissement, c'est-à-dire de la température et du débit du porteur froid.

3. Procédé selon les revendications précédentes, **caractérisé en ce qu'**un compresseur d'un porteur froid contrôle en continu la pression et le débit, et est approprié pour fonctionner à des températures inférieures à 0 degrés centigrades.

4. Procédé selon les revendications précédentes, **caractérisé en ce que** le chauffage différentiel est réalisé par un système de chauffage sélectif (2), soit par un contact direct soit par un contact non direct, ledit système (2) pouvant affecter exclusivement les couches avec une conductivité thermique élevée, c'est-à-dire les couches du matériau rigide à récupérer du composant multicouches à traiter, sans réchauffer les couches adjacentes.

5. Procédé selon les revendications 1 et 4, **caractérisé en ce que**, dans le cas d'un système de contact non direct, le système de chauffage sélectif peut être du type à induction magnétique, du type photonique ou du type de rayonnement; alors que dans le cas d'un système de contact direct, le système de chauffage par induction sélectif peut être un système de contact basé sur l'effet de chauffage Joule.

6. Procédé cryogénique selon la revendication 1, **caractérisé en ce que** la séparation des matériaux est exclusivement obtenue par l'imposition de cycles thermiques à une fréquence contrôlée de la couche du matériau à récupérer, ou sans superposition de vibrations à la première fréquence naturelle de résonance.

7. Procédé selon les revendications précédentes, **caractérisé en ce que** l'insufflation de mélanges liquides et/ou gazeux à pression et débit contrôlés pour la délamination finale des couches (C2, P, M, CI) est obtenue par un compresseur, ou dans une chambre à atmosphère contrôlée dans laquelle l'élément (A) à traiter est immergé.

8. Procédé selon les revendications précédentes, **caractérisé en ce que** le détachement des couches (C2, P, M, CI) de l'élément (A) est réalisé au moyen de contraintes de cisaillement réparties et transférées auxdites couches (C2, P, M, CI) par des systèmes de dépression de contact, ou par découpage mécanique au moyen d'un système d'embrayage rigide affectant l'épaisseur des couches externes (C2, P, CI)
